# EUROPEAN PATENT APPLICATION

(11) **EP 4 707 763 A1**
(43) Date of publication of application: **11.03.2026**
(21) Application number: 25175428.9
(22) Date of filing: 09.05.2025
(51) Int. Cl.: G01M 3/16, G01M 3/18

(54) **A PIPING ASSEMBLY**

(30) Priority: 04.09.2024 TW 113209603 U
(71) Applicant: Cooler Master Co., Ltd., Taipei City 114065 (TW)
(72) Inventor: CHEN, Wen-Hung, 114065 Taipei City (TW); CHEN, Chun-Hsien, 114065 Taipei City (TW); HSIAO, Yang-Chun, 114065 Taipei City (TW)
(74) Representative: Grünecker Patent- und Rechtsanwälte PartG mbB

(57) **Abstract**

A piping assembly includes a tube having a first end and a second end, a first leak-detection wire and a second leak-detection wire that are embedded within the tube during a molding process, a resistor electrically connected between first ends of the leak-detection wires, and a monitoring device electrically connected to second ends of the leak-detection wires to monitor a resistance of a leak detection circuit formed by first leak-detection wire, the resistor, and the second leak-detection wire.

## Description

### TECHNICAL FIELD

The present disclosure related to a type of piping assembly, and more particularly to a piping assembly that includes leak-detection wires.

### BACKGROUND

As demands of performance on modern electronic devices continue to increase, water-cooling technology has emerged as a solution to address the growing heat dissipation needs of those devices. However, water-cooling systems often face the issue of fluid leakage within the tube. To address this issue, leak detection wires are typically installed around the outer perimeter of the tube. However, such externally positioned leak-detection wires are prone to damage, rust, or corrosion. Therefore, R&D in this field are actively working to solve these challenges.

### SUMMARY

The present disclosure provides a piping assembly designed to minimize the risk of damage to leak-detection wires. These wires are embedded within a tube during the injection molding process and are electrically connected to a resistor. As a result, the exposure of the leak-detection wires to external forces and environmental factors is decreased, thereby extending their service life.

The invention is as defined in the appended claims. Aspects of the disclosure provide a piping assembly. The piping assembly includes a tube having a first end and a second end, a first leak-detection wire and a second leak-detection wire that are embedded within the tube during a molding process, a resistor electrically connected between first ends of the leak-detection wires, and a monitoring device electrically connected to second ends of the leak-detection wires to monitor a resistance of a leak detection circuit formed by first leak-detection wire, the resistor, and the second leak-detection wire.

In one embodiment of the present disclosure, the monitoring device includes a positive terminal and a negative terminal, and the second ends of the of the first leak-detection wire and the second leak-detection wire are respectively connected to the positive terminal and the negative terminal of the monitoring device.

In one embodiment of the present disclosure, the tube includes an inner surface, a channel that is surrounded by the inner surface, and an outer surface that faces away from the inner surface.

In one embodiment of the present disclosure, the first leak-detection wire and second leak-detection wire are positioned between the inner surface and the outer surface.

In one embodiment of the present disclosure, each of the first leak-detection wire and the second leak-detection wire extends from the first end of the tube to the second end and surrounds the central axis of the tube.

In one embodiment of the present disclosure, each of the first leak-detection wire and the second leak-detection wire has a pitch between 2mm and 20mm.

In one embodiment of the present disclosure, the tube is made of a single material or multiple materials, including but not limited to plastic one.

In one embodiment of the present disclosure, the piping assembly further includes a retaining ring attached to the tube, wherein the resistor is mounted on the retaining ring.

In one embodiment of the present disclosure, the first leak-detection wire and the second leak-detection wire extend in a helical pattern.

In one embodiment of the present disclosure, the first leak-detection wire and the second leak-detection wire extend in a longitudinal direction in the tube in a generally parallel manner to a central axis of the tube.

Aspects of the disclosure provide a method of detecting leakage in a piping assembly according to another embodiment. The method includes forming a tube that is configured to allow liquids to flow through, embedding a first leak-detection wire and a second leak-detection wire into the tube of the piping assembly during a molding process of forming the tube, connecting first ends of the first leak-detection wire and the second leak-detection wire to a resistor, connecting second ends of the first leak-detection wire and the second leak-detection wire to a monitoring device to form a leak-detection circuit, and monitoring a resistance of the leak detection circuit by the monitoring device, wherein when the tube is undamaged, the resistance measured by the monitoring device reflects a first resistance, and when a rupture occurs in the tube, the liquids seep into the rupture site and the resistance measured by the monitoring device reflects a second resistance.

In one embodiment of the present disclosure, when the first leak-detection wire and the second leak-detection wire are crossed, the resistance measured by the monitoring device reflects a short circuit resistance.

In one embodiment of the present disclosure, the monitoring device includes a positive terminal and a negative terminal, and the second ends of the of the first leak-detection wire and the second leak-detection wire are respectively connected to the positive terminal and the negative terminal of the monitoring device.

In one embodiment of the present disclosure, the tube includes an inner surface, a channel that is surrounded by the inner surface, and an outer surface that faces away from the inner surface.

In one embodiment of the present disclosure, the first leak-detection wire and second leak-detection wire are positioned between the inner surface and the outer surface.

In one embodiment of the present disclosure, each of the first leak-detection wire and the second leak-detection wire extends from the first end of the tube to the second end and surrounds the central axis of the tube.

In one embodiment of the present disclosure, each of the first leak-detection wire and the second leak-detection wire has a pitch between 2mm and 20mm.

In one embodiment of the present disclosure, the tube is made of a single material or multiple materials, including but not limited to plastic one.

In one embodiment of the present disclosure, the piping assembly further includes a retaining ring attached to the tube, wherein the resistor is mounted on the retaining ring.

In one embodiment of the present disclosure, the first leak-detection wire and the second leak-detection wire extend in a helical pattern.

In one embodiment of the present disclosure, the first leak-detection wire and the second leak-detection wire extend in a longitudinal direction in the tube in a generally parallel manner to an central axis of the tube.

### BRIEF DESCRIPTION OF THE DRAWINGS

Aspects of the present disclosure can be understood from the following detailed description when reading with the accompanying FIGS. It is noted that, in accordance with the standard practice in the industry, various features are not drawn to scale. In fact, the dimensions of the various features may be increased or reduced for clarity of discussion.
FIG. 1 is a perspective view of the piping assembly and monitoring device according to one embodiment of this invention.
FIG. 2 is a cross-sectional view of the piping assembly shown in FIG. 1.
FIG. 3 is a cross-sectional view showing a rupture in the tube from FIG. 2.
FIG. 4 is a perspective view of the piping assembly according to one embodiment of this invention.
FIG. 5 is a perspective view of the piping assembly according to one embodiment of this invention.
FIG. 6 is a perspective view of the piping assembly according to one embodiment of this invention.
FIG. 7 is a cross-sectional view of the piping assembly shown in FIG. 5.
FIG. 8 is a cross-sectional view of the piping assembly according to one embodiment of this invention.

### DETAILED DESCRIPTION

Detailed descriptions and technical contents of the present invention are illustrated below in conjunction with the accompanying drawings. However, it is to be understood that the descriptions and the accompanying drawings disclosed herein are merely illustrative and exemplary and not intended to limit the scope of the present invention.

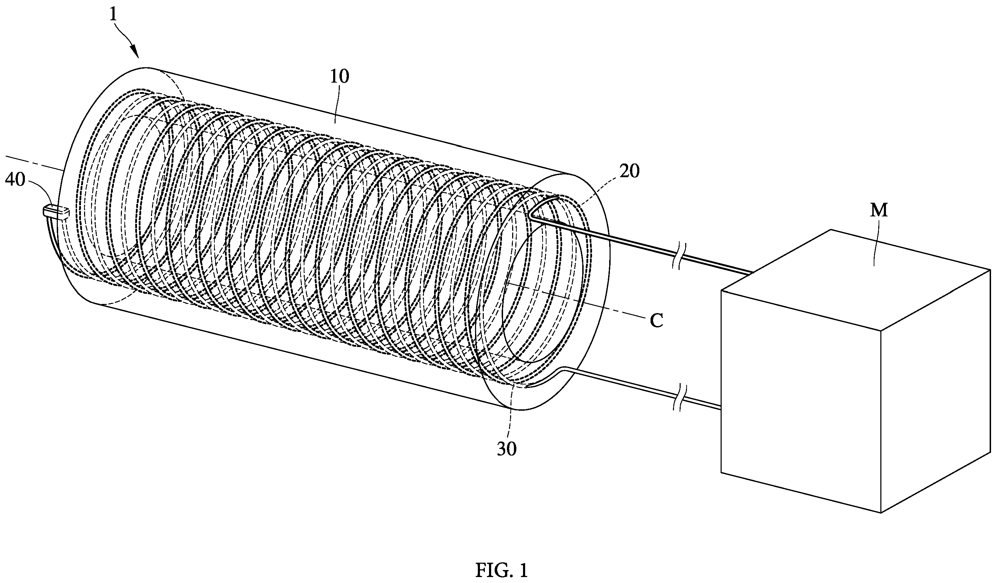

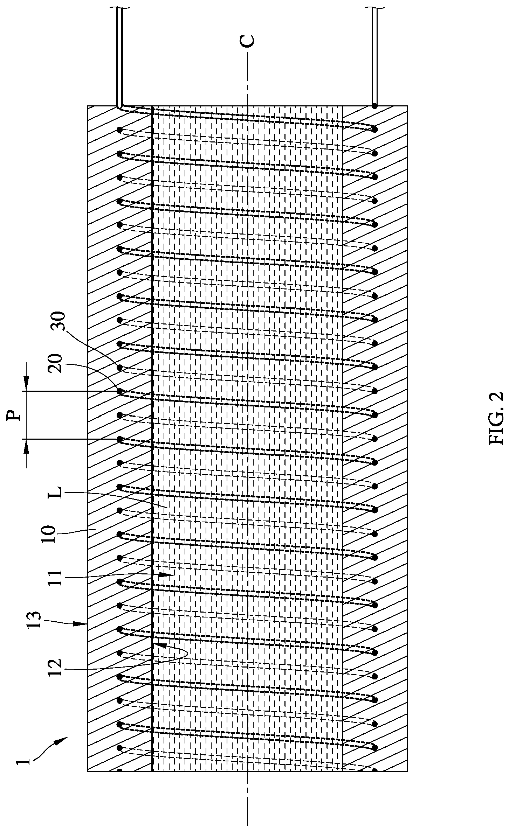

Referring to FIGS. 1 and 2. FIG. 1 is a perspective view of a piping assembly and monitoring device according to one embodiment of this invention and FIG. 2 is a cross-sectional view of the piping assembly shown in FIG. 1.

In one embodiment, the piping assembly 1 includes a tube 10 with a first end and a second end, a first leak-detection wire 20 and a second leak-detection wire 30, and a resistor 40. During the molding process of the tube 10, both the first leak-detection wire 20 and the second leak-detection wire 30 are at least partially embedded within the tube 10. The resistor 40 is electrically connected to both the first leak-detection wire 20 and the second leak-detection wire 30.

The tube 10 is made of a single material or multiple materials including but not limited to plastic one, for example. The tube 10 includes a channel 11, an inner surface 12, and an outer surface 13. The channel 11 is surrounded by the inner surface 12 and serves as a conduit for liquids L to flow through, while the outer surface 13 faces away from the inner surface 12. The first leak-detection wire 20 and the second leak-detection wire 30 are positioned at least partially between the inner surface 12 and the outer surface 13 of the tube 10 and extended from the first end of the tube 10 to the second end of the tube 10. Further, the first leak-detection wire 20 and the second leak-detection wire 30 are arranged in a helical pattern around the central axis C of the tube 10, with a pitch P of each of the first leak-detection wire 20 and the second leak-detection wire 30 between 2mm and 20mm.

In one embodiment, first ends of the first leak-detection wire 20 and the second leak-detection wire 30 are, for example, respectively connected to the resistor 40, while second ends of the first leak-detection wire 20 and the second leak-detection wire 30 are, for example, connected to the positive and negative terminals of a monitoring device M. Accordingly, a closed circuit is formed.

In one embodiment, the resistance value of the closed circuit, as monitored by the monitoring device M, indicates the current status of the piping assembly 1. For example, when the tube 10 is undamaged, the closed circuit includes the resistor 40, the first leak-detection wire 20, the second leak-detection wire 30, and the monitoring device M. Therefore, the resistance value measured by the monitoring device M reflects the resistance value of the resistor 40, which is approximately 1 MΩ.

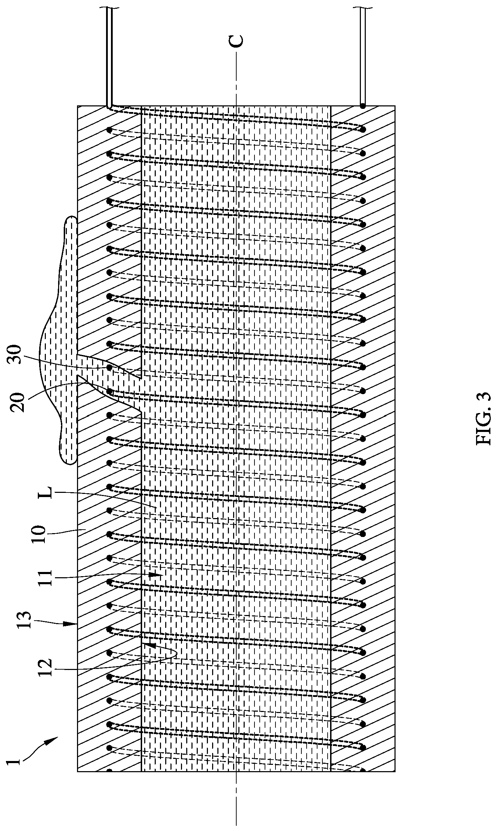

Referring to FIG. 3. FIG. 3 is a cross-sectional view showing a rupture in the tube from FIG. 2. When a rupture occurs in the tube 10, the liquids L within channel 11 seep into the rupture site and simultaneously contacts the first leak-detection wire 20 and the second leak-detection wire 30. Because current flows along the path of least resistance, it travels through the liquids L, the first leak-detection wire 20 and the second leak-detection wire 30, and the monitoring device M, forming a closed circuit. At this point, the resistance measured by the monitoring device M reflects the resistance of the liquids L within this closed circuit, typically falling within a range of approximately 1 kΩ to 800 kΩ. When the monitoring device M detects a resistance change within this range, it identifies a rupture in the tube 10 and sends a leak signal to the system to notify the technicians for maintenance.

On the other hand, if the first leak-detection wire 20 and the second leak-detection wire 30 are crossed due to external force or manufacturing defect, the resistance value measured by monitoring device M represents the resistance of the closed circuit formed by the first leak-detection wires 20, the second leak-detection wire 30 and the monitoring device M. In this situation, the resistance is typically less than 100 Ω. When the monitoring device M detects a resistance of less than 100 Ω, it indicates that the first leak-detection wire 20 and the second leak-detection wire 30 within the tube 10 are crossed and sends a fault signal to the system to notify the technicians for maintenance.

Additionally, if one of the first leak-detection wire 20 and the second leak-detection wire 30 within the tube 10 is broken, no closed circuit is formed. As a result, the resistance measured by monitoring device M will typically exceed 1.5 MΩ. When the monitoring device M detects a resistance that exceeds 1.5 MΩ, it identifies that one of the first leak-detection wire 20 and the second leak-detection wire 30 is broken, and it sends a fault signal to the system to notify the technicians for maintenance.

In one embodiment, the design involves partially embedding the first leak-detection wire 20 and the second leak-detection wire 30 within the tube 10 during the molding process. This design helps minimize the risk of damage to the wires from external forces or environmental factors, thereby extending the lifespan of the leak-detection wires. Additionally, for maintenance purposes, only the exposed ends of the wires at both ends of the tube need to be inspected, which simplifies the maintenance process.

Because the first leak-detection wire 20 and the second leak-detection wire 30 are partially embedded within the tube 10, the wires are concealed and the overall appearance of the piping assembly 1 is better. This design is particularly suitable for environments where aesthetics is essential. Additionally, embedding the leak-detection wires within the tube reduces the possibility of inadvertent contact with people or objects, lowering safety hazards such as accidental touching.

Further, embedding the first leak-detection wire 20 and the second leak-detection wire 30 within the tube 10 effectively prevents direct contact with liquids L, lowering the risk of rust and corrosion. It should be noted that the first leak-detection wire 20 and the second leak-detection wire 30 do not need to be only partially embedded. In another embodiment, the leak-detection wires can be fully embedded within the tube. In this embodiment, the resistor can also be embedded within the tube, with additional wires connecting the internal leak-detection wires to an external monitoring device.

In one embodiment, embedding the first leak-detection wire 20 and the second leak-detection wire 30 within the tube 10 during the molding process integrates them into the tube 10 after molding, reducing the need for additional assembly steps and hence increasing the production efficiency of the piping assembly 1.

In one embodiment, the helical arrangement of the first leak-detection wire 20 and the second leak-detection wire 30, which extend from one end of the tube 10 to the other, allows liquids L to contact the wires more easily when the tube 10 ruptures, thereby improving the sensitivity of leak-detection. Additionally, adjusting the pitch P of each wire to be between 2 mm and 20 mm further improves the leak-detection sensitivity.

It should be noted that the number of the leak-detection wires 20 and 30 is not limited to two. In another embodiment, there can be more than two leak-detection wires, ultimately converging into 2N output wires, where N is a natural number.

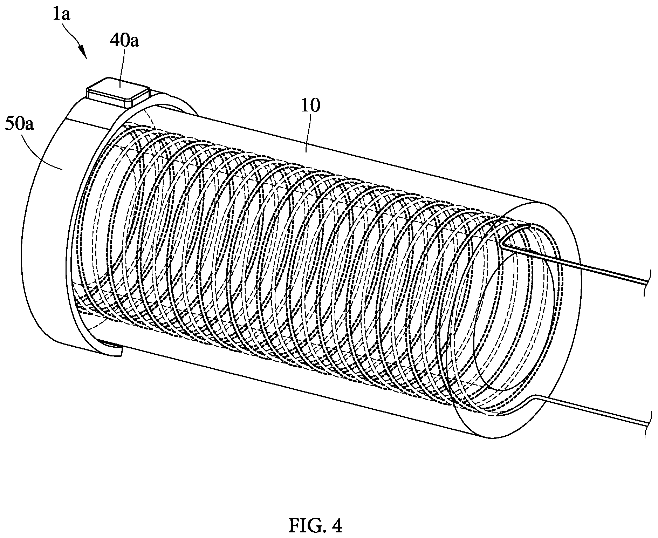

Referring to FIG. 4. FIG. 4 is a perspective view of the piping assembly according to one embodiment of this invention. The piping assembly 1a in this embodiment is similar to the piping assembly 1 described above, so the differences will be described, and the similarities will not be repeated.

In one embodiment, the piping assembly 1a further includes a retaining ring 50a that is attached to the tube 10. The resistor 40a is mounted on the retaining ring 50a. It should be noted that resistor 40a is not limited to being mounted on the retaining ring 50a. In another embodiment, the resistor may be positioned elsewhere, while the retaining ring can support a control box instead. The control box can be used for leak detection and monitoring, as well as tracking changes in the resistance or signal of the wires under various conditions. Upon detecting an abnormal condition, the control box will trigger an alert by emitting a sound, sending a signal, shutting off the water pump, or closing a valve to prevent further damage. The control box can also record and analyze data, for example, logging information such as the time and location of leak events. The data can be used for subsequent analysis, maintenance, and improvements.

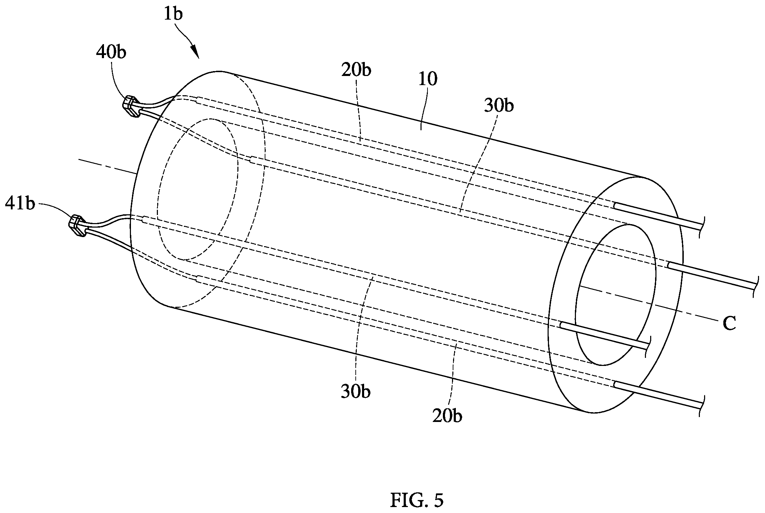

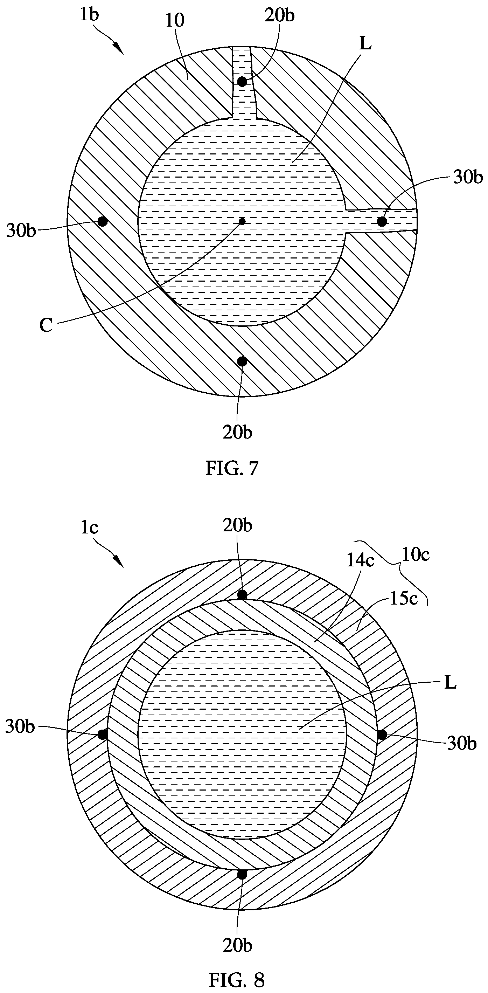

Referring to FIGS. 5 and 7. FIG. 5 is a perspective view of the piping assembly according to one embodiment of this invention and FIG. 7 is a cross-sectional view of the piping assembly shown in FIG. 5. The piping assembly 1b is similar to the piping assembly 1 described above, with the primary difference being the shape of the leak-detection wires and the number of the resistors. Therefore, the difference between the piping assembly 1b and 1 will be described, and the similarities will not be repeated.

In one embodiment, the piping assembly 1b includes two first leak-detection wires 20b and two second leak-detection wires 30b, which are elongated and positioned parallel to the central axis C of the tube 10. The four leak-detection wires are evenly distributed circumferentially around the inside of the tube 10. For example, the two first leak-detection wires 20b are located on the upper and lower sides of the tube 10, while the two second leak-detection wires 30b are positioned on the left and right sides.

In one embodiment, the piping assembly 1b includes a first resistor 40b and a second resistor 41b. First ends of the two first leak-detection wires 20b and the two second leak-detection wires 30b are respectively connected to the positive terminal and the negative the negative terminal of a monitoring device (as shown in Figure 1). Second ends of the first leak-detection wires 20b and the second leak-detection wires 30b are electrically connected to first resistor 40b and the second resistor 41b, respectively. Accordingly, a closed circuit is formed by one of the first leak-detection wires 20b, one of the second leak-detection wires 30b, the first resistor 40b, and the monitoring device and another closed circuit is formed by the other first leak-detection wire 20b, the other second leak-detection wire 30b, the second resistor 41b, and the monitoring device.

When the tube 10 ruptures, it allows liquids L inside the tube to contact one of the first leak-detection wires 20b and one of the second leak-detection wires 30b (e.g., those on the upper and right sides). Since the current flows through the path with lower resistance, it will travel through the liquids L, one of the first two leak-detection wires 20b, one of the second leak-detection wires 30b, and the monitoring device, forming a closed circuit. At this point, the resistance value monitored by the device will reflect the resistance of the liquids L within this closed circuit rather than the resistance of resistor 40b. As a result, the monitoring device can detect a rupture in the tube 10 and send a leak signal to the system, notifying the technicians of the need for maintenance.

It should be noted that the number of leak-detection wires 20b and 30b is not limited to four, nor is the number of resistors limited to two. In another embodiment, the number of leak-detection wires may be two and positioned at various circumferential locations around the tube based as required. Additionally, there may be a single resistor connected to both leak-detection wires.

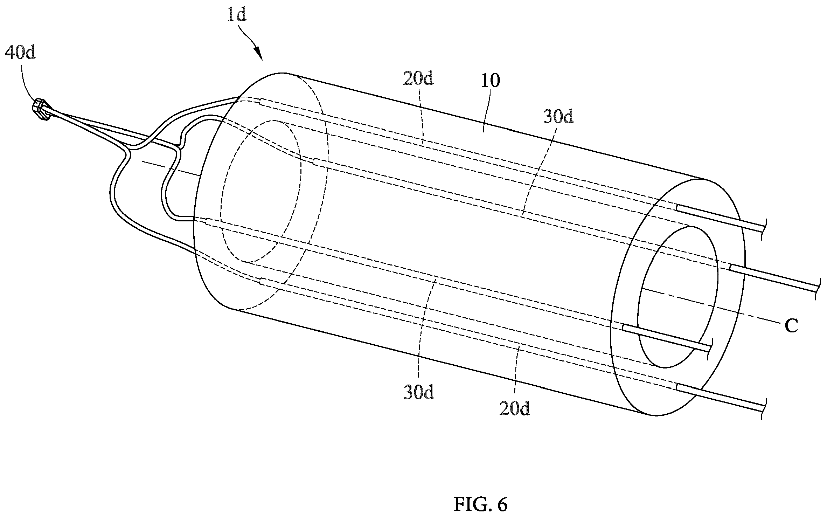

Referring to FIG. 6. FIG 6 is a perspective view of the piping assembly according to one embodiment of this invention. The piping assembly 1d is similar to the piping assembly 1d described above, with the primary difference being the shape of the leak-detection wires and the number of the resistors. Therefore, the difference between the piping assembly 1d and 1b will be described, and the similarities will not be repeated.

In one embodiment, the piping assembly 1d includes a single resistor 40d. First ends of the two first leak-detection wires 20d are electrically connected to each other, while first ends of the two second leak-detection wires 30d are also electrically connected to each other. The resulting two ends from these connections are then connected to a single resistor 40d in series with a monitoring device (as shown in Figure 1).

When the tube 10 ruptures, allowing liquids L inside the tube to contact any pair of the leak-detection wires (e.g., one of the first leak-detection wires 20d and one of the second leak-detection wires 30d), the current will flow through the path with lower resistance. Therefore, the current will travel through the liquids L, the connected leak-detection wires, and the monitoring device, forming a closed circuit. At this point, the resistance value monitored by the device will reflect the resistance of the liquids L within this closed circuit rather than the resistance of resistor 40d. As a result, the monitoring device can detect a rupture in the tube 10 and send a leak signal to the system, notifying the technicians of the need for maintenance.

It should be noted that the number of leak-detection wires 20d and 30d is not limited to four, nor is the number of resistors limited to one. In other embodiments, only two leak-detection wires may be positioned at various circumferential locations around the tube based on requirements. Additionally, there may be more resistors or other components included, depending on the desired circuit design and detection sensitivity.

Referring to FIG. 8. FIG. 8 is a cross-sectional view of the piping assembly according to one embodiment of this invention. The piping assembly 1c in this embodiment is similar to the piping assembly described above, with the primary difference being the structure of the tube. Therefore, the difference between the piping assembly 1c and 1 will be described, and the similarities will not be repeated.

In one embodiment, the tube 10c includes an inner layer 14c and an outer layer 15c that surrounds the inner layer 14c. The materials of inner layer 14c and outer layer 15c are different. For example, the inner layer 14c can be waterproof, while the outer layer 15c can be water-absorbent, but the embodiment is not limited thereto. In another embodiment, the inner and outer layers may be made of other suitable materials. The first leak-detection wires 20b and the second leak-detection wires 30b are embedded within the outer layer 15c. As shown in FIG. 8, when the tube 10c is intact, the waterproof inner layer 14c prevents the liquids L within the tube 10c from contacting the first leak-detection wires 20b and the second leak-detection wires 30b. When a rupture (not shown) occurs in the tube 10c, the liquids can quickly diffuse through the absorbent outer layer 15c, contacting at least two of the first and second leak-detection wires 20b and 30b and enabling rapid detection of the rupture.

Configuring the leak-detection wires within the disclosed piping assembly, which are partially embedded in the tube during the molding process, significantly minimize the risk of damage from external forces and environmental factors. The configuration helps extend the lifespan of the leak-detection wires. Further, when maintenance is necessary, only the exposed ends of these wires at each end of the tube need to be inspected, simplifying the maintenance process.

Additionally, the leak-detection wires are partially embedded within the tube, which keeps them concealed and enhances the aesthetics of the entire piping assembly. The design is particularly well-suited for applications where a polished appearance is desired. By embedding the leak-detection wires, the risk of inadvertent contact with people or objects is minimized, thereby reducing potential safety hazards. Embedding the leak-detection wires also effectively prevents contact with liquids, lowering the risk of rust or corrosion. By embedding the leak-detection wires within the tube during the molding process, the tube and leak-detection wires form a single integrated unit, eliminating the need for additional assembly steps and improving the production efficiency of the piping assembly.

Extending the leak-detection wires from one end of the tube to the other in a helical or elongated arrangement maximizes the possibility of contact with liquids in case of a rupture, thereby improving the sensitivity of leak detection.

The tube includes an inner layer made of waterproof material and an outer layer that is absorbent material. The leak-detection wires are positioned within the outer layer. The waterproof inner layer prevents the liquids inside the tube from contacting the leak-detection wires when the tube is intact. However, if the tube ruptures, the liquids swiftly travels through the absorbent outer layer to contact at least two leak-detection wires, allowing for prompt detection of the tube rupture.

Therefore, embodiments disclosed herein are well adapted to attain the ends and advantages mentioned as well as those that are inherent therein. The particular embodiments disclosed above are illustrative only, as the embodiments disclosed may be modified and practiced in different but equivalent manners apparent to those of ordinary skill in the relevant art having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present disclosure. Of course, the disclosed embodiments are merely exemplary embodiments and that various modifications can be made without departing from the spirit and scope of the disclosure. Further, it should be understood that various aspects of the embodiment are not mutually exclusive of each other and can be combined as desired by a person of ordinary skill in the art as a matter of design choices.

The embodiments illustratively disclosed herein suitably may be practiced in the absence of any element that is not specifically disclosed herein and/or any optional element disclosed herein. While compositions and methods are described in terms of "comprising," "containing," or "including" various components or steps, the compositions and methods can also "consist essentially of" or "consist of" the various components and steps. All numbers and ranges disclosed above may vary by some number. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces.

## Claims

1. A piping assembly (1, 1a, 1b, 1d), comprising:
a tube (10) having a first end and a second end;
a first leak-detection wire (20, 20b, 20d) and a second leak-detection wire (30, 30b, 30d) that are embedded within the tube (10) during a molding process;
a resistor (40, 40a, 40b, 40d, 41b) electrically connected between first ends of the leak-detection wires; and
a monitoring device (M) electrically connected to second ends of the leak-detection wires to monitor a resistance of a leak detection circuit formed by the first leak-detection wire (20, 20b, 20d), the resistor (40, 40a, 40b, 40d, 41b), and the second leak-detection wire (30, 30b, 30d).

2. The piping assembly (1) of claim 1, wherein the monitoring device (M) includes a positive terminal and a negative terminal, and the second ends of the first leak-detection wire (20) and the second leak-detection wire (30) are respectively connected to the positive terminal and the negative terminal of the monitoring device (M).

3. The piping assembly (1) of claim 1 or2, wherein the tube (10) includes an inner surface (12), a channel (11) that is surrounded by the inner surface (12), and an outer surface (13) that faces away from the inner surface (12).

4. The piping assembly (1) of claim 3, wherein the first leak-detection wire (20) and second leak-detection wire (30) are positioned between the inner surface (12) and the outer surface (13).

5. The piping assembly (1, 1a) of one of claims 1 to 4, wherein each of the first leak-detection wire (20) and the second leak-detection wire (30) extends from the first end of the tube (10) to the second end and surrounds a central axis (C) of the tube (10).

6. The piping assembly (1, 1a) of claim 5, wherein each of the first leak-detection wire (20) and the second leak-detection wire (30) has a pitch (P) between 2mm and 20mm.

7. The piping assembly (1, 1a, 1b, 1d) of one of claims 1 to 6, wherein the tube (10) is made of a single material or multiple materials, including but not limited to plastic one.

8. The piping assembly (1a) of one of claims 1 to 7, further comprising a retaining ring (50a) attached to the tube (10), wherein the resistor (40a) is mounted on the retaining ring (50a).

9. The piping assembly (1, 1a) of one of claims 1 to 8, wherein the first leak-detection wire (20) and the second leak-detection wire (30) are extending in a helical pattern.

10. The piping assembly (1b, 1d) of one of claims 1 to 4, wherein the first leak-detection wire (20b, 20d) and the second leak-detection wire (30b, 30d) are extending in an elongated pattern.

11. A method of detecting leakage in a piping assembly (1, 1a, 1b, 1d), the method comprising:
forming a tube (10) that is configured to allow liquids (L) to flow through;
embedding a first leak-detection wire (20, 20b, 20d) and a second leak-detection wire (30, 30b, 30d) into the tube (10) of the piping assembly (1) during a molding process of forming the tube (10);
connecting first ends of the first leak-detection wire (20, 20b, 20d) and the second leak-detection wire (30, 30b, 30d) to a resistor (40, 40a, 40b, 40d, 41b);
connecting second ends of the first leak-detection wire (20, 20b, 20d) and the second leak-detection wire (30, 30b, 30d) to a monitoring device (M) to form a leak-detection circuit; and
monitoring a resistance of the leak-detection circuit by the monitoring device (M), wherein:
when the tube (10) is undamaged, the resistance measured by the monitoring device (M) reflects a first resistance, and
when a rupture occurs in the tube (10), the liquids (L) seep into the rupture site and the resistance measured by the monitoring device (M) reflects a second resistance.

12. The method of claim 11, wherein when the first leak-detection wire (20, 20b, 20d) and the second leak-detection wire (30, 30b, 30d) are crossed, the resistance measured by the monitoring device (M) reflects a short circuit resistance.

13. The method of claim 11 or 12, wherein the monitoring device (M) includes a positive terminal and a negative terminal, and the second ends of the first leak-detection wire (20) and the second leak-detection wire (30) are respectively connected to the positive terminal and the negative terminal of the monitoring device (M).

14. The method of one of claims 11 to 13, wherein the tube (10) includes an inner surface (12), a channel (11) that is surrounded by the inner surface (12), and an outer surface (13) that faces away from the inner surface (12).

15. The method of claim 14, wherein the first leak-detection wire (20) and second leak-detection wire (30) are positioned between the inner surface (12) and the outer surface (13).

16. The method of one of claims 11 to 15, wherein each of the first leak-detection wire (20) and the second leak-detection wire (30) extends from one end of the tube (10) to another end and surrounds a central axis (C) of the tube (10).

17. The method of claim 16, wherein each of the first leak-detection wire (20) and the second leak-detection wire (30) has a pitch (P) between 2mm and 20mm.

18. The method of one of claims 11 to 17, wherein the tube (10) is made of a single material or multiple materials, including but not limited to plastic one.

19. The method of one of claims 11 to 18, further comprising a retaining ring (50a) attached to the tube (10), wherein the resistor (40a) is mounted on the retaining ring (50a).

20. The method of one of claims 11 to 19, wherein the first leak-detection wire (20) and the second leak-detection wire (30) are extending in a helical pattern.

21. The method of one of claims 11 to 15, wherein the first leak-detection wire (20b, 20d) and the second leak-detection wire (30b, 30d) extend in a longitudinal direction in the tube (10) in a generally parallel manner to a central axis (C) of the tube (10).
